# EUROPEAN PATENT SPECIFICATION

(11) **EP 1 300 570 B1**
(45) Date of publication and mention of the grant of the patent: **25.05.2005**
(21) Application number: 01308461.1
(22) Date of filing: 03.10.2001
(51) Int. Cl.: F02D 23/02, F02D 33/02, F02B 39/10

(54) **Control system for an internal combustion engine boosted with an electronically controlled pressure charging device**
Steuerung für eine aufgeladene Brennkraftmaschine mit elektronisch geregeltem Ansaugluftverdichter
Système de commande pour un moteur à combustion interne ayant un dispositif de suralimentation à commande électronique

(43) Date of publication of application: 09.04.2003
(73) Proprietor: Visteon Global Technologies, Inc., Dearborn, Michigan 48126-2490 (US)
(72) Inventor: Criddle, Mark Anderton, Chelmsford, Essex CM2 9TY (GB); Dixon, Jon, Maldon, Essex CM9 8DU (GB); George, Sunoj Cherian, Langdon Hills, Essex SS16 6TH (GB); Morris, Guy David, South Woodham Ferrers, Essex CM3 5ZG (GB); Petrovitch, Simon, Ditton Fields, Cambridge CB5 8QJ (GB)
(74) Representative: McLean, Robert Andreas

(56) References cited:
- EP-A- 0 352 064
- WO-A-98/54449
- US-A- 4 757 686
- US-A- 4 774 811
- PATENT ABSTRACTS OF JAPAN vol. 1998, no. 11, 30 September 1998 (1998-09-30) -& JP 10 159577 A (HITACHI LTD), 16 June 1998 (1998-06-16)
- PATENT ABSTRACTS OF JAPAN vol. 1998, no. 04, 31 March 1998 (1998-03-31) -& JP 09 317485 A (HITACHI LTD), 9 December 1997 (1997-12-09)
- PATENT ABSTRACTS OF JAPAN vol. 2000, no. 11, 3 January 2001 (2001-01-03) -& JP 2000 230427 A (NIPPON SOKEN INC), 22 August 2000 (2000-08-22)
- PATENT ABSTRACTS OF JAPAN vol. 1997, no. 06, 30 June 1997 (1997-06-30) -& JP 09 032569 A (MITSUBISHI MOTORS CORP), 4 February 1997 (1997-02-04)

## Description

The present invention relates to an electronically driven pressure boosting system that is used to boost the torque output of an internal combustion engine.

One way to boost the torque and peak power provided by a reciprocating piston internal combustion engine, is to use a pressure boosting device to increase the mass airflow into the engine. The increased air supply then permits a greater amount of fuel to be combusted in each ignition event.

Examples of pressure boosting devices include turbochargers and superchargers. A turbocharger is driven entirely or partly by energy in the exhaust stream. This is an efficient use of otherwise mostly wasted energy, but such devices suffer from the limitation that the boost is not available or significant at low engine speeds (rpms). Often, a driver may demand high torque from an engine at low rpms, for example at the start of an overtaking manoeuvre. If the pressure boost device is driven only by exhaust gasses, then boosted torque will not be available at low rpms.

One way of dealing with the limitation is to provide an electrical motor connected to the turbocharger, which is energised when the turbo boost is insufficient. This type of electrically driven pressure boosting device is, however, expensive in terms of hardware cost. Another solution is to use a supercharger, that is, a compressor device that is driven by means other than an exhaust gas turbine, for example via a mechanical linkage to the engine, or by an electrical motor driven from the vehicle battery and/or battery charging system. Mechanical supercharger systems can however, be mechanically bulky and expensive. Electrically driven supercharger systems provide a lower cost and compact solution, but can require a significant amount of electrical energy when driven, for example, up to three times the current which can normally be supplied by a typical motor vehicle 12 volt battery. Motor vehicle alternators are typically specified to provide either all or most of the power requirement for the entire vehicle, the battery only being used to store sufficient electrical power to start the vehicle engine and occasionally deliver power when the accessory load exceeds the alternator output. Typical European vehicle alternators are specified to provide about 130 A of current, while an electrically powered supercharger can require in excess of 300 A. An alternator able to supply this much current is significantly more expensive, heavy and bulky than a conventional alternator.

Because the pressure boosting device cannot be 100% efficient, there will also be inevitable electrical and mechanical losses associated with the device, that can place significant mechanical and thermal stress on components within the device.

The expense of increasing the capacity of the vehicle battery and charging system, or the dealing with inherent thermal and mechanical limits of components within the pressure boosting device, to meet any level of driver demand can easily outweigh the benefits of using an electrically driven pressure charging device. Therefore it is important to drive such a device in an efficient manner, and within the limits of the vehicle electrical power supply, and thermal and mechanical limits of the device itself. At the same time, it is important to maximise the torque boost benefit perceived by the driver over as wide a range of driving conditions as possible. Because the level at which an electrically driven pressure boosting device is driven is essentially independent from the engine operating speed, it is therefore necessary to devise an appropriate control system for operating the pressure boosting device that takes account of the system's limitations.

It is an object of the present invention to provide a convenient and economical electrical pressure boosting device and method for increasing the torque available from an internal combustion engine.

According to the invention, there is provided an air charge boosting system for an internal combustion engine, the system comprising an electrically driven pressure charging device, an electronically controlled throttle for controlling engine aspiration, and an electronic control system for controlling engine operation, wherein the electronic control system is arranged to:
a) set the throttle position to regulate the aspiration of the engine;
b) calculate at least one desired aspiration parameter according to engine torque demand;
c) determine at least one actual aspiration parameter according to engine operating conditions;
d) compare the desired aspiration parameter(s) with the actual aspiration parameter(s); and
e) drive the pressure charging device to boost aspiration of the engine in accordance with the comparison between the desired aspiration parameter(s) and the actual aspiration parameter(s) only when the torque demand cannot be met by natural aspiration alone.

Also according to the invention, there is provided a method of operating an air charge boosting system for an internal combustion engine, the system comprising an electrically driven pressure charging device, an electronically controlled throttle for controlling engine aspiration, and an electronic control system for controlling engine operation, wherein the method comprises the steps of using the electronic control system to:
i) set the throttle position to regulate the aspiration of the engine;
ii) calculate at least one desired aspiration parameter according to engine torque demand;
iii) determine at least one actual aspiration parameter according to engine operating conditions;
iv) compare the desired aspiration parameter(s) with the actual aspiration parameter(s); and
v) drive the pressure charging device to boost aspiration of the engine in accordance with the comparison between the desired aspiration parameter(s) and the actual aspiration parameter(s) only when the torque demand cannot be met by natural aspiration alone.

The pressure charging device may be any type of device for boosting the air mass flow into the engine, whether partially or wholly driven by an electric power supply, but is most preferably an electrically driven supercharger.

The engine torque output at any given engine speed is then controlled by the throttle setting at throttle positions below wide open throttle. Once the throttle position reaches wide open throttle, the control system operates the pressure charging device according to the comparison between the desired aspiration parameter(s) and actual aspiration parameter(s), for example in such a way as to reduce a difference between these aspiration parameter(s) to zero in the case of steady state operation of the pressure charging device.

The pressure charging device operation is therefore limited to regions where engine torque demand cannot be met with natural aspiration alone. Furthermore, the efficiency of assisted aspiration is increased by avoiding restriction by a partly open the throttle, and by matching the actual aspiration parameter(s) to the desired aspiration parameter(s) by the electrical control of the pressure charging device.

In a preferred embodiment of the invention, the pressure charging device is an electronically driven supercharger. This may have a number of rotary impeller vanes. The geometry of the each vane is fixed, and the actual air charge delivered through the supercharger is determined by the rotation speed of the impeller vanes.

The electronic control system may be arranged to determine an allowable operating limit to the operation of the pressure charging device based on at least one operating parameter of the air charge boosting system, and to drive the pressure charging device responsive to the desired aspiration parameter(s) and within the determined allowable operating limit.

The desired aspiration parameter(s) may be determined according to current engine operating conditions, including a current aspiration parameter(s). The current air charge may be measured directly, for example by means of an air flow sensor, or indirectly, for example by engine inlet air pressure sensor and an engine speed sensor.

The electronic control system preferably provides closed-loop control over the operation of the electrically driven pressure charging device by monitoring the current air charge. Other engine operating parameter(s) may also be measured, for example engine speed and engine temperature. It may also be useful to measure ambient conditions such as ambient temperature and relative humidity. Any such parameters which may have an effect on the calculation of the desired aspiration parameter(s) may be included in this calculation.

The engine torque demand may be calculated according to a driver demand, for example the output from an electronic accelerator pedal sensor. The engine torque demand may be modified according to other inputs, for example an input from a traction control system, a clutch pedal sensor, a collision warning system, or a system for controlling the operation of an automatic gearbox.

Preferably, the desired aspiration parameter(s) is/are a measure of desired air pressure and/or desired mass air flow.

The electronic control system may be arranged to determine an allowable operating limit to the operation of the pressure charging device based on at least one operating parameter of the air charge boosting system, and to drive the pressure charging device responsive to the desired aspiration parameter(s) and within the determined allowable operating limit.

Because the pressure charging device operation is restricted within allowable operating limits, this helps to avoid problems due to operation of the device beyond the allowable limits, thereby allowing more economical system design, and will in general also result in reduced electrical power consumption for the device. Both of these benefits contribute towards reducing system cost, and improving the electrical efficiency of the device.

The overall efficiency of assisted aspiration is also increased by matching the actual aspiration parameter(s) to the desired aspiration parameter(s) by the electrical control of the pressure charging device.

The operating parameter may be a thermal parameter of the pressure charging device, in which case the determined allowable operating limit may be a maximum thermal limit. Additionally or alternatively, the operating parameter may be a state-of-charge parameter for a motor vehicle battery, in which case the determined allowable operating limit may be a minimum supply voltage for said battery.

Preferably, however, there are a plurality of operating parameters, and the determined allowable operating limit is the limit that places the greatest restriction on the operation of the electrically driven pressure charging device so that all operating parameters remain within allowable limits. The operation of the device is then constrained so that the operation is suitable for the parameter that places the greatest restriction on operation of the device. For example, on a hot summer day with a hot engine, the thermal limits may be reached well before the battery state-of-charge starts to limit the amount of current that may be provided by the battery, while on a cold winter night, the reverse may be the case.

It is particularly advantageous if the calculation of the allowable operating limit involves a reference to both a soft operational limit and a hard operational limit. The operation of the electrically driven charge boosting device then being limited when the corresponding operating parameter exceeds the soft operational limit. The limitation is then such that the operating parameter does not at a later time exceed the hard operational limit. Such limitation may take several forms, but so that operation of the pressure boosting device is not suddenly or unexpectedly limited, it is preferred if the driven boosting device is progressively limited as the corresponding operating parameter approaches the hard operational limit.

The invention will now be described in further detail, and by way of example only, with reference to the accompanying drawings, in which:
Figure 1 is a schematic diagram of a motor vehicle having a 1.4 litre, four cylinder engine system with air charge boosting system, according to the invention;
Figure 2 is a graph plotting engine torque against engine speed for the 1.4 litre engine of Figure 1 when naturally aspirated, tuned either for maximum torque at a low moderate engine speed, or maximum engine torque at a higher moderate engine speed;
Figure 3 is a graph similar to that of Figure 2, showing also the effect on engine torque output with the engine of Figure 1 when using the air charge boosting system;
Figure 4 is a graph plotting engine compressor torque boost against driver throttle engine demand for the engine of Figure 1, showing the torque boost effect of the air charge boosting system at different engine speeds;
Figure 5 is a schematic overview of the electronic control system for controlling the operation of the pressure charging device;
Figure 6 is a diagram of the control system architecture of the air charge boosting system; and
Figures 7, 8 and 9 are plots that show schematically how the vehicle electricity supply responds to current drawn by the supercharger and other vehicle consumer units.

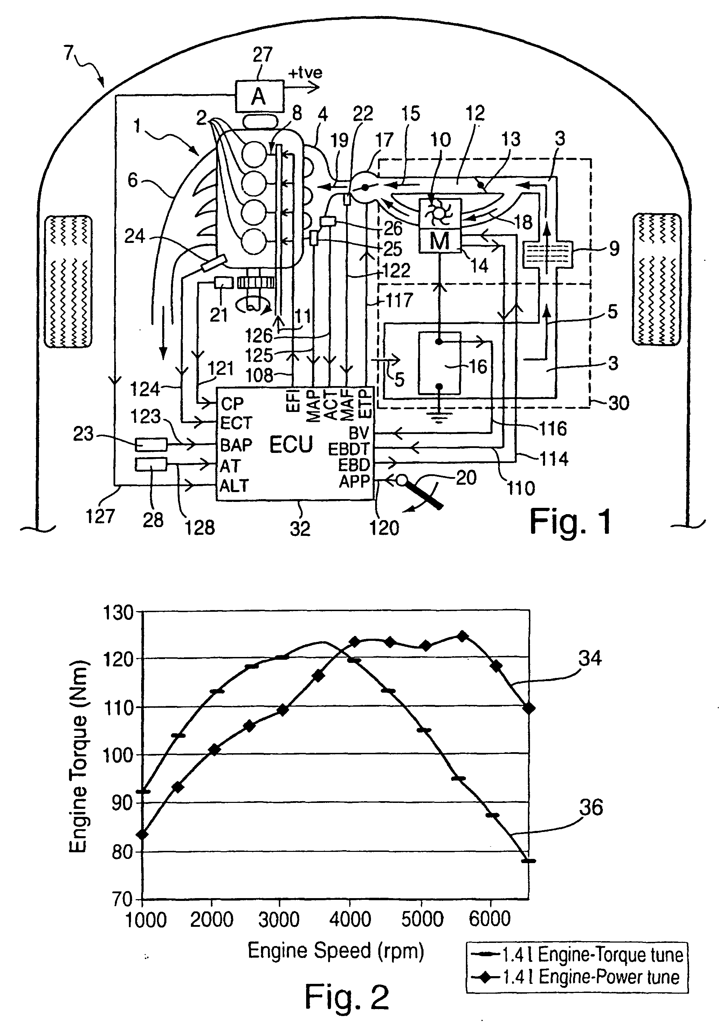

Figure 1 shows schematically part of a motor vehicle 7 having a reciprocating piston internal combustion engine 1, with four in-line cylinders 2, an air inlet manifold 4 and an exhaust manifold 6 leading respectively to and from each of the cylinders 2. A fuel injection system 8 supplies fuel 11 to cylinders 2 in a manner well-known in the art. A pressure charging device, here an electrically driven supercharger 10, is provided upstream of the inlet manifold 4.

Air flows to the inlet manifold 4 through the supercharger 10 when this is operational, or when the supercharger is disabled or idling, through an air bypass conduit 12 in parallel with the supercharger 10. Air is supplied to the supercharger 10 and/or the bypass 12 along an inlet air path 3.

The air bypass conduit 12 has an air valve 13 that automatically opens to permit inlet air 5 to bypass 15 the supercharger 10 when airflow 18 through the supercharger is insufficient to charge the engine cylinders 2 with air. Air supply 19 to the engine 1 is then controlled by the setting of an electronically controlled throttle valve 17 downstream of the supercharger 10 and bypass 12, and the activation of the supercharger 10. When the supercharger 10 is not activated, the engine 1 is normally aspirated, and when the supercharger 10 is activated, the airflow to the engine is increased.

The supercharger 10 is driven only by a switched reluctance electrical motor (M) 14 powered by a 12-volt lead/acid vehicle battery 16. The battery is recharged by an engine-driven battery recharger, here a belt-driven alternator 27. The battery 16 has a current rating which is about 30 A higher than would normally be specified for a mass-market four cylinder engine motor car. In addition to powering the supercharger 10, the battery 16 also provides for the vehicle starting, lighting and ignition requirements. The battery 16 also lies within the air supply path 3, within a hollow enclosure 30 that surrounds the battery 16 and supercharger 10, so that inlet air 5 flows around the battery 16. An air filter 9 is provided in the air supply path 3 downstream of the battery 16 and upstream of the supercharger 10 and air bypass 12.

The vehicle driver (not shown) can control the engine power via a movable accelerator pedal assembly 20, that provides an electrical signal 120 to an engine control unit (ECU) 32 indicative of accelerator peddle position (APP).

The engine control unit monitors several engine operating parameters via nine input lines 116,120-127. One line 116 is connected to the battery supply so that an A/D converter (not shown) within the ECU 32 can measure the battery 16 voltage. Another input line 127 comes from the alternator, which has its own internal electronics and processor (not shown) that monitor the temperature of the alternator, and also capacity ultilization of the alternator, depending on the alternator temperature, alternator rotational speed and current drawn from the alternator. The alternator capacity utilization is communicated from the alternator to the ECU 32 along the line 127.

Seven other input lines 120-126 are each connected to a corresponding sensor device 20-26 for measuring engine operating conditions. The sensors include: the accelerator pedal assembly (APP) 20 for measuring driver demand; a crank position (CP) sensor 21 for measuring engine speed; a mass air flow sensor (MAF) downstream of the throttle 17 for measuring directly the amount of air entering the cylinders 2; a barometric air pressure (BAP) sensor 23 for measuring atmospheric pressure; an engine coolant temperature (ECT) sensor 24 for measuring the temperature of coolant circulating with the engine; a manifold air pressure (MAP) sensor 25 for measuring the pressure of air in the inlet manifold 4; and an inlet air charge temperature (ACT) sensor 26 for measuring the temperature of the inlet air.

Additionally, an ambient temperature (AT) sensor 28 measures the ambient air temperature and provides an input on line 128 to the electronic control unit 32.

Optionally, control electronics in the EBD motor 14 provides a temperature signal (EBDT) 110 to the engine control unit 32. Alternatively, the engine control unit may calculate temperature parameters for the EBD 10 based on the ambient temperature signal 128 from the ambient temperature sensor 28, and the speed and duty cycle of the EBD 10.

As will be explained in more detail below, the engine control unit 32 calculates an engine torque demand from the various input signals, and provides a number of output signals to control various vehicle and engine operating parameters, including a fuel injection control signal 108, throttle valve control signal 117 and a supercharger motor control signal 114. The engine torque demand is therefore set at least in part by the position of the accelerator pedal 20.

As will be explained in more detail below, when the driver moves the accelerator pedal 20 to demand engine torque in excess of that which can be delivered by the engine 1 when naturally aspirated, the throttle valve 17 moves to a maximum setting to admit the maximum volume of air 19 into the cylinders 2. The engine control unit 32 then activates the supercharger motor 14 under certain moderate or low engine speeds, but not at high engine speeds. As long as the torque demand exceeds that available from natural aspiration of the engine alone, the boosted engine torque output is controlled by the supercharger speed and the amount of fuel supplied to the cylinders. As soon as torque demand falls within that available from natural aspiration, the electrically driven supercharger 10 is no longer driven by the supercharger motor 14. This helps to conserve battery lifetime, and reduce heating of the supercharger 10, thereby preserving battery capacity and extending the lifetime of the supercharger 10. If the engine is an injection engine, the engine control unit 32 can control the amount of injected fuel 11 by electrical control 108 of the injectors 8.

When supercharger operation is required, the engine control unit 32 sets both the speed of the supercharger 10 and delivered fuel amount according to the current torque demand. The engine control unit 32 monitors the output 120-126 from the various sensors 20-26, as well as the battery voltage 116, and then adjusts the supercharger speed and/or the amount of delivered fuel 11 to achieve an appropriate level of rich or lean engine operation.

Figure 2 shows a graph of engine torque against engine speed for a conventional four-cylinder in-line engine, such as that described above, but without supercharging. As can be seen from curve 34 of Figure 2, the engine can be tuned to provide good power at moderately high engine speeds ("power tune"), but at the expense of low-end torque.

Alternatively, as shown by curve 36, the engine can be tuned to give good torque at low and moderate engine speeds ("torque tune"), but at the expense of top-end power. Whilst "power tune" will appeal to the 'sporting' driver, it will result in lower levels of satisfaction for the majority of car owners. The requirement to deliver good real world 'performance feel' commonly results in an engine torque output as shown in the "torque tune" curve, where torque at high engine speeds has been compromised in order to promote torque output below 3500 rpm. Although engine gearing can be selected to minimize undesirable characteristics, in practice conventional engines are tuned to achieve a compromise.

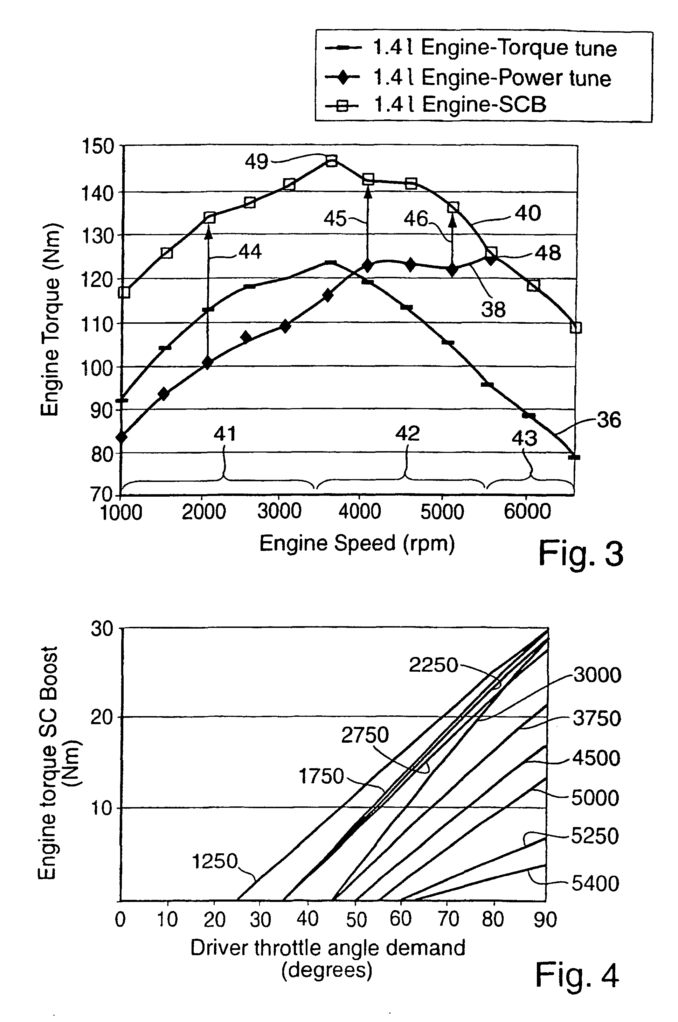

With reference to Figure 3, in the preferred embodiment of the invention, a relatively low capacity engine, for example below about 1.8 litres capacity, is tuned to give good torque at high rpm 43, at the expense of torque at low engine speed 41 and moderate engine speed 42, as illustrated by curve 38. This has the secondary effect of allowing good fuel economy at steady highway cruising speeds through the need to use wider throttle openings to achieve cruising speed. As can be seen from curve 40 for supercharger boost (SCB), there is then an increase 44,45,46 in maximum available engine torque when the driver demands power in excess of that available from a naturally aspirated engine. The boost is made available under control of the engine control unit 32 only in a region of low 41 and moderate 42 engine speeds, and is progressively limited to transition smoothly into engine power near or at a peak 48 in the un-boosted torque curve 38 in a region of relatively high engine speed 43. This is done by progressively limiting the maximum allowable supercharger boost near point 48.

Thus, the engine control unit 32 enables use of the compressor 10 only in such a way that the engine torque output with the compressor torque boost peaks 49 in the region of moderate engine speed 42.

Figure 4 shows a graph of engine torque supercharger boost against driver throttle angle demand between 0° and 90°. The diagonal straight lines on the graph are labelled with engine speed in rpm, between 1250 rpm and 5400 rpm. The vertical scale corresponds to the difference in engine torque in Figure 3 between the boosted torque curve 40 and the un-boosted torque curve 38. At the maximum throttle angle 90°, the engine torque supercharger boost is the maximum value shown in Figure 3. As throttle angle demands declines from 90°, so does the engine torque supercharger boost, until this declines to zero boost corresponding to curve 38 of Figure 3.

As can be seen from Figure 4, as the engine speed increases towards the transition point 48 of Figure 3, the slope of the engine torque supercharger boost curve declines, until at the transition point 48, there is no engine torque supercharger boost. This shows graphically the progressive disabling of the supercharger boost.

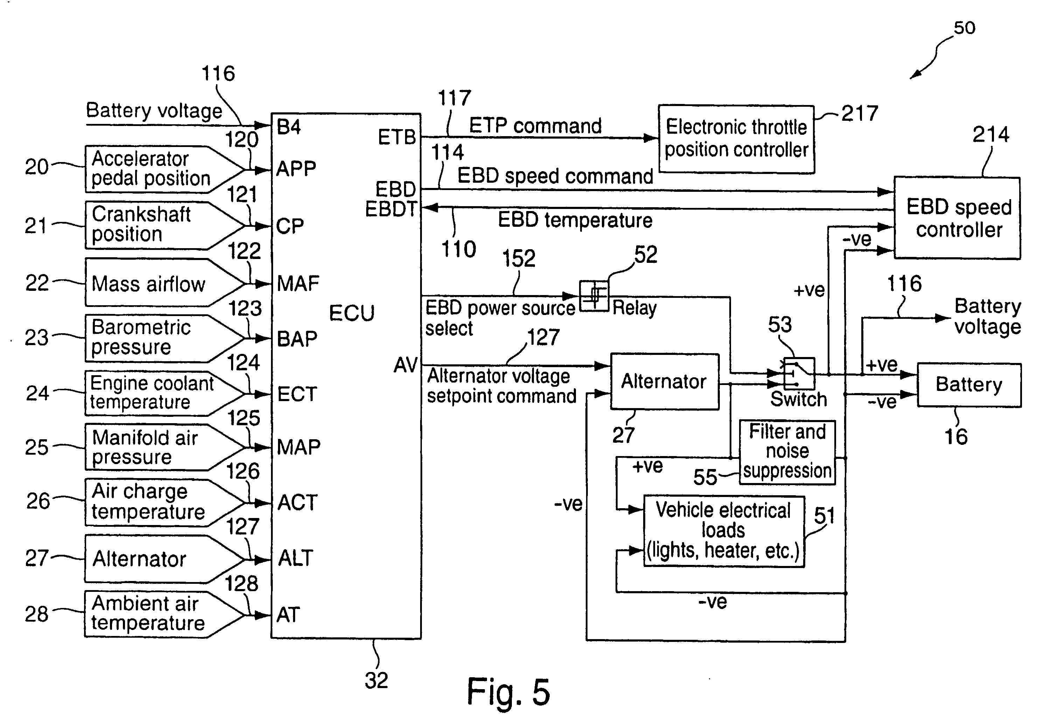

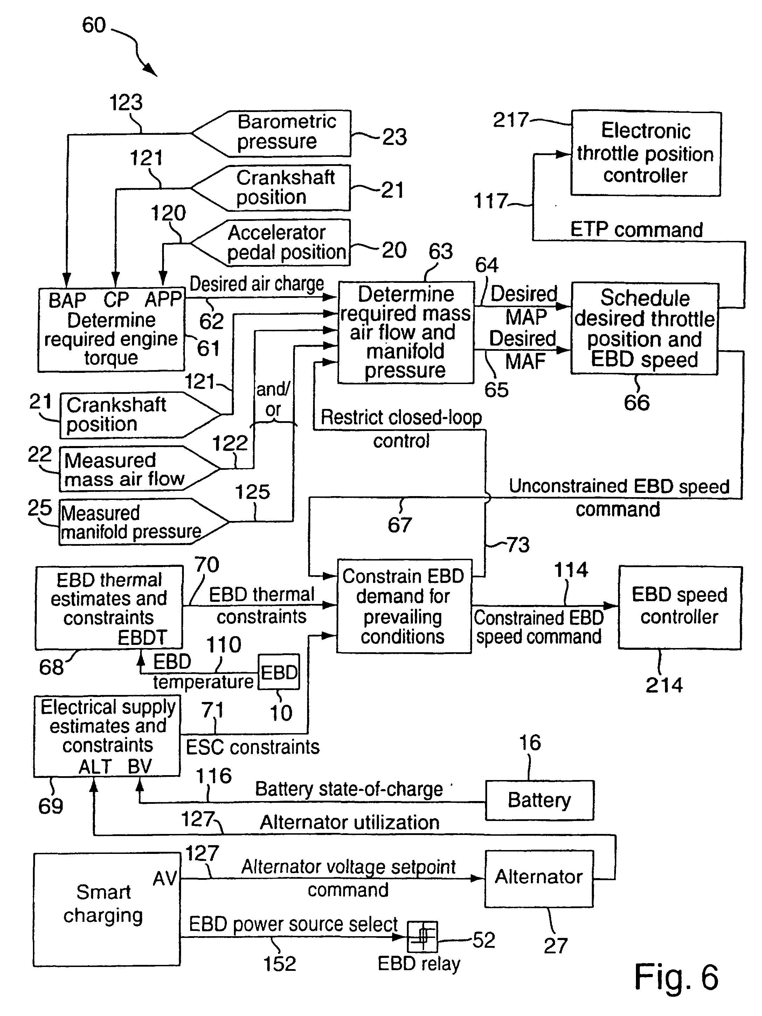

The invention will now be described with reference to Figure 5, which shows a schematic overview of an electronic control system 50 for controlling the operation of the pressure charging device 10, and also to Figure 6, which shows a diagram of the control system architecture 60 of the air charge boosting system.

Figure 5 shows how the engine control unit (ECU) 32 receives the various inputs 116,120-128 described above, in order to generate various outputs to control the operation of the system. One output is an electronic throttle position (ETP) command 117, sent to an electronic throttle position controller 217 that controls the throttle 17. The ETP controller 217 then sets the position of the throttle 17 accordingly.

The ECU 32 also sends an electronic boost device (EBD) command 114 to an EBD controller 214 that controls the supercharger electric motor 14. When the compressor 10 is not required, the compressor motor 14 is controlled to idle at a relatively low regulated speed of about 10,000 rpm, which consumes relatively little electric power and which also produces no significant boost pressure. By idling the supercharger at 10,000 rpm, it is possible to reduce the spin up time to the rated operating speed of about 60,000 rpm to less than 0.3 s.

The EBD 10 may not be capable of indefinite operation at its maximum output owing to limitations of the battery 16 storage and alternator 27 charging current, and so the battery state-of-charge (SOC) may restrict operation. Additionally some components of the EBD 10 such as bearings or motor windings (not shown) may exceed design temperature limits at high operation duty factors. It may therefore also be necessary to constrain the operation of the EBD 10 owing to these considerations.

Although the electrical power supply to the EBD 10 may be from the usual vehicle electrical system, it is preferred if the EBD 10 during operation above idle speeds is isolated at least partially from the battery charging system 27 and run mainly or entirely from the battery 16.

Therefore, the ECU 32 calculates allowable operating limits to the operation of the pressure charging device based on the state of the electrical supply system. When the state of the electrical supply system is within an acceptable range, the supercharger is driven using the engine-driven battery recharger, and when the state of the electrical supply system is not within an acceptable range, the battery is isolated from the alternator and the supercharger is driven using the battery alone.

In the preferred embodiment of the invention, the ECU determines the state of the electrical supply system both by monitoring the battery voltage, and by monitoring the capacity utilization of the alternator. If the electrical load on the alternator becomes large enough to saturate the alternator, then system voltage will drop, and this can cause a noticeable loss of functionality in other electrical units powered by the vehicle electrical system.

To prevent this happening, once the alternator reaches saturation point, the EBD 10 during operation above idle speeds is isolated from the battery charging system 27 and run from the battery 16 alone. The alternator is then able to power other vehicle consumer units (CU) 51, such as lights and electrical accessories, which are therefore isolated from voltage drops that may occur at the battery owing to the large electrical current required by the EBD 10, typically between about 150 A and 300 A. This switching is achieved by means of an EBD power source select command 152 sent from the ECU 32 to a relay 52 and switch 53.

The ECU therefore drives the pressure charging device using the alternator when the battery state-of-charge is within an acceptable range, and isolates the battery from the alternator and drives the pressure charging device using the battery alone when the battery state-of-charge is not within an acceptable range.

The regulated voltage set point of the alternator 27 is then controlled by an alternator voltage setpoint command 127 sent from the ECU 32 to the alternator 27.

Referring now in particular to Figure 6, the ECU 32 uses the input 120-123 from the accelerator pedal position sensor 20, crankshaft position sensor 21 and barometric pressure sensor 23 to determine the required engine torque 61. The calculation 61 will also take account of other relevant factors, such as engine friction, accessory losses and, for a spark ignition engine, the prevailing spark advance angle. From this, it is possible to calculate a desired air charge 62, that is, the amount of air, required for each cylinder ignition event.

The desired air charge 62, is then used by the ECU 32 together with other inputs, in particular the engine speed as measured from the crankshaft position 121, and the measured mass air flow 122 and/or the measured manifold pressure 125 in a calculation 63 to determine the required manifold pressure 64 and the required mass air flow 65. A determination is made within calculation 63 as to whether or not EBD operation is required, based on whether or not the desired manifold pressure is greater than the barometric pressure, and if so, a hysteresis term is applied to avoid rapid cycling of the EBD 10.

The ECU 32 is then able to schedule the desired throttle position and the EBD speed 66, from which the ECU generates the ETP command 117 for the electronic throttle position controller 217, and an unconstrained EBD speed command 67.

As mentioned above, the EBD speed command 67 will in some circumstances need to be constrained, for example because of over-heating of the electronic boost device 10, the maximum rated speed or duty cycle of the device, owing to strength and lubrication considerations, or because of the battery state-of-charge (SOC) constraints. Constraints may also have to applied to avoid regions in which the pressure, and the desired manifold air flow according to a boost map of EBD characteristics held within ECU memory (not shown).

Preferably, derating factors for the EBD thermal and SOC constraints are applied as required to generate the final constrained EBD speed command 114. In the event that the system is constrained for both thermal limits and SOC considerations, then the largest derating factor is applied.

The calculation of the derating factors should be chosen so as to minimise driver perception of the derating, and also make the derated performance predicable for the driver, by avoiding sudden changes. The thermal derating calculation 68 involves two parts, namely regulation and estimation. The estimation part of the calculation is based on the operating conditions of the EBD 10. Both the present and future steady state temperatures of critical parts of the EBD are estimated. Critical parts typically include the bearings supporting an EBD shaft and copper windings of the EBD motor. When the system is initialised, the temperatures of these parts are estimated based on the temperatures when the system was turned off, the time it has been off, and the prevailing ambient temperature, for example from the ambient temperature sensor 28. The dynamic temperature estimate accounts for variations in the air flowing past the EBD, the thermal inertia of the component parts, and the heat generated in the system from both electrical and mechanical sources.

The regulation is then performed as follows. When the power consumption of the EBD 10 would saturate the alternator 27 power output, resulting in a fall in the vehicle system voltage as the battery 16 was used to supplement the alternator, unacceptable effects such as dimming of lights, etc. might be experienced. To prevent this, the relay 52 is engaged to switch 53 powering of the EBD to the battery alone, whilst the remaining vehicle system is powered from the alternator 27.

A 'soft' limit is calibrated for the system state-of-charge (SOC) above which no action need be taken to protect battery charge. A 'hard' limit is also calibrated below which SOC the battery should not be allowed to fall. When SOC falls below the soft limit the system must start to take action so as to achieve a 'soft landing' at the hard limit of SOC without sharp falls in engine output due to reduction in power to the EBD 10. The derate factor for the EBD in the feedback loop 73 is increased until the power drawn by the EBD is equal to the excess generation capacity of the alternator 27, at which point the relay 52 may be switched so that the alternator now powers the EBD 10 as well as the remaining vehicle electrical system. The EBD 10 power is then held at or below a level that does not cause the alternator 27 to fully saturate.

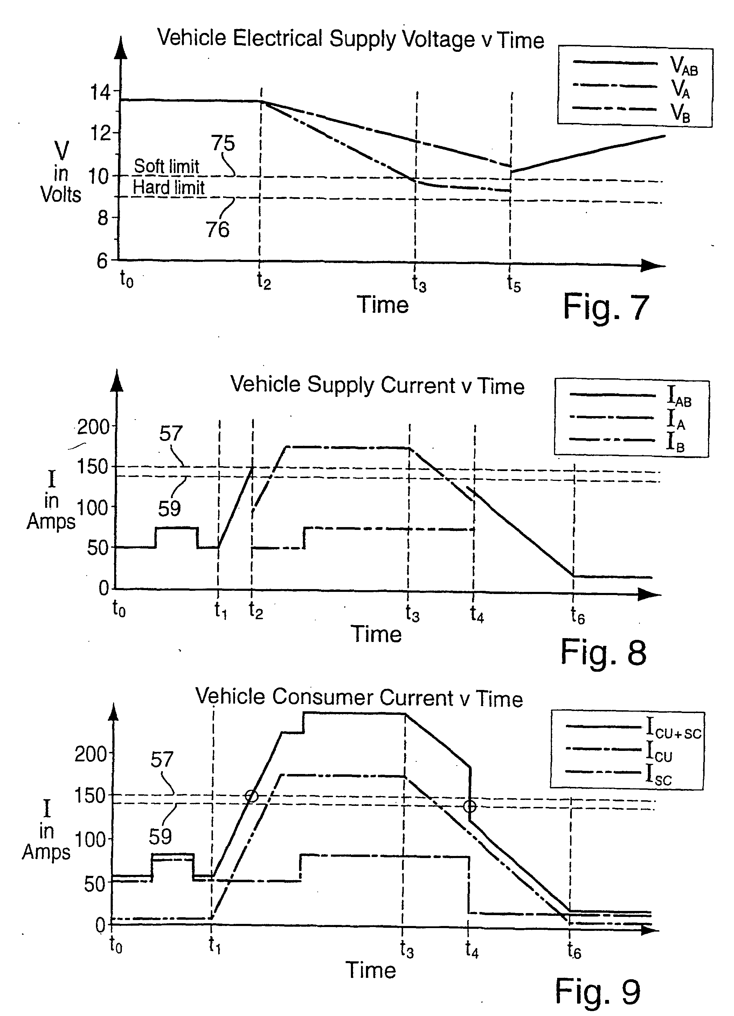

The management of the vehicle electrical supply is illustrated in the schematic graphs of Figures 7, 8 and 9.

Figure 7 plots the voltage of the vehicle electrical supply against time, Figure 8 plots the vehicle supply current against time, and Figure 9 plots the current drawn by vehicle electrical consumers against time.

In the example shown in these figures, initially at time to the alternator 27 is connected to the battery 16, and the vehicle supply voltage V_{AB} is a nominal 13.6 volts. Vehicle electrical consumer units (CU) such as lights, electrically heated windows, etc, initially draw a moderate amount of current I_{CU}, 50 A, rising temporarily to 75 A. Initially, the supercharger 10 is set to idle at about 10,000 rpm, drawing just a few amps of current I_{SC}. Because the total drawn current I_{CU+SC} is below the electrical capacity of the alternator 27 of 150 A, the alternator 27 is electrically connected to the battery 16 through the relay 52 and switch 53.

At time t₁ the driver demand requires operation of the supercharger 10, after which the supercharger current I_{SC} rises rapidly towards about 175 A. When the total current I_{CU+SC} reaches a threshold value 57 of 150 A at time t₂, the relay 52 causes the switch 53 to open, and the alternator 27 becomes partially isolated from the battery 16. A filter 55 is provided between the battery 16 and alternator 27 in order to provide a degree of smoothing on the alternator voltage, which could otherwise fluctuate owing to the relatively slow response of the alternator to sudden changes in electrical load. In its simplest form, the filter 55 is a 0.1 Ω resistor, although the filter could also include frequency dependent elements, such as a high pass filter.

The supercharger 10 is now free to draw very high currents I_{SC} from the battery 16 that may cause the battery voltage V_{B} to fall significantly. Because the filter 55 limits the flow of current between the alternator 27 and the battery 16, the alternator is not exposed to the full load of the supercharger 10, and is able to continue providing regulated power to the remainder of the vehicle systems.

During the operation of the large electrical accessory, the battery will become increasingly discharged, as shown by the drop in battery voltage V_{B}. At time t₃ battery voltage V_{B} reaches a soft threshold level 75 at 10 volts, the ECU 32 takes action to reduce the supercharger current I_{SC}, so that the battery voltage remains above a hard limit 76 of 9 volts.

At time t₄ the total vehicle current I_{CU+SC} has dropped to the threshold value 57 of 150 A, and so the ECU 32 acts to close the switch 53, after which the total vehicle current is provided by the connected alternator 27 and battery 16. Optionally, a second threshold value 59 of 145 A may be used when the current is falling to provide hysteresis. At time t₆, the supercharger current I_{SC} has dropped to an idle level, for example, owing to high engine speed 43 having been reached.

As shown in Figure 7, following time t₂, as the battery voltage V_{B} is being depleted, the ECU 32 gradually lowers the alternator voltage V_{A} to just below 11 volts. This causes power in electrical consumers to drop, but because the drop is slow, this is not noticeable to the vehicle driver. At time t5, when the alternator and battery are reconnected, the combined voltage V_{AB} is about 10.5 volts, but then rises steadily as the alternator 27 recharges the battery 16.

If no action were taken to reduce the alternator voltage V_{A} between times t₂ and t₅, then there would be a sudden and noticeable drop in system voltage at time t₅ when the alternator 27 and battery 16 are reconnected. By gradually reducing the alternator voltage V_{A} while the supercharger 10 is active, this problem is reduced or eliminated.

Therefore, when the relay switch 53 is closed, the system voltage is sufficiently low to ensure that the alternator 27 is not saturated and no sudden change in electrical system voltage occurs. The system voltage is then gradually increased again back to the desired voltage at a rate determined by the charging of the battery 16 so as to ensure that the alternator is never saturated and is always able to provide voltage regulation.

The invention described above is applicable to both spark ignition and compression engines. The electric boosting device (EBD) may be the only inlet air compressor device in the system, or it may be combined with another such device, for example an exhaust gas driven turbocharger device.

The invention therefore provides a convenient and economical electrical pressure boosting device and method for increasing the torque available from an internal combustion engine. The electrically driven pressure boosting device is provided as part of the engine's air intake system, and is fully electronically controllable. Use of such a compressor device increases the engine's maximum torque output over portions of its operating range that are significant to the performance perceived by the driver. The invention is compact, and avoids the need to increase excessively the capacity of the vehicle electrical system, or the thermal and mechanical rating of the device, thus allowing benefits in terms of both vehicle performance and overall fuel economy, at a reasonable system cost.

## Claims

1. An air charge boosting system for an internal combustion engine (1), the system comprising an electrically driven pressure charging device (10), an electronically controlled throttle (17) for controlling engine aspiration, and an electronic control system (32) for controlling engine operation, wherein the electronic control system (32) is arranged to:
a) set the throttle (17) position to regulate the aspiration of the engine (1);
b) calculate at least one desired aspiration parameter (62) according to engine torque demand (61);
c) determine at least one actual aspiration parameter (122,125) according to engine operating conditions (22,25);
d) compare (63) the desired aspiration parameter(s) (62) with the actual aspiration parameter(s) (122,125); and
e) drive (114,214) the pressure charging device (10) to boost aspiration of the engine (1) in accordance with the comparison (63) between the desired aspiration parameter(s) (62) and the actual aspiration parameter (s) (64,65) only when the torque demand (61) cannot be met by natural aspiration alone.

2. A method of operating an air charge boosting system for an internal combustion engine (1), the system comprising an electrically driven pressure charging device (10), an electronically controlled throttle (17) for controlling engine aspiration, and an electronic control system (32) for controlling engine operation, wherein the method comprises the steps of using the electronic control system (32) to:
i) set the throttle (17) position to regulate the aspiration of the engine (1);
ii) calculate at least one desired aspiration parameter (62) according to engine torque demand (61);
iii) determine at least one actual aspiration parameter (122,125) according to engine operating conditions (22,25);
iv) compare (63) the desired aspiration parameter(s) (62) with the actual aspiration parameter(s) (122,125); and
v) drive (114,214) the pressure charging device (10) to boost aspiration of the engine (1) in accordance with the comparison (63) between the desired aspiration parameter(s) (62) and the actual aspiration parameter(s) (122,125) only when the torque demand (61) cannot be met by natural aspiration alone.

3. A method as claimed in Claim 2, in which the desired aspiration parameter(s) (64,65) is/are calculated according to current engine operating conditions (20,21,23), including a current air charge (122,125).

4. A method as claimed in Claim 3, in which the electronic control system (32) provides closed-loop control over the operation of the electrically driven pressure charging device (10) by monitoring the current aspiration parameter(s) (122,125).

5. A method as claimed in any of Claims 2 to 4, in which the engine torque demand (61) is calculated according to a driver demand (20,120).

6. A method as claimed in any of Claims 2 to 5, in which the desired aspiration parameter(s) is/are a measure of desired air pressure (64) and/or desired mass air flow (65).

7. A method as claimed in any of Claims 2 to 6, in which the electronic control system (32) is arranged to calculate (68,69) an allowable operating limit (70,71) to the operation of the pressure charging device (10) based on at least one operating parameter (110,116,127) of the air charge boosting system, and to drive the pressure charging device (10) responsive to the desired aspiration parameter(s) (64,65) and within the calculated allowable operating limit (70,71).

8. A method as claimed in Claim 6 or Claim 7, in which the operating parameter is a thermal parameter (110) of the pressure charging device (10), and the calculated allowable operating limit is a maximum thermal limit (70).

9. A method as claimed in any of Claims 6 to 8, in which the operating parameter is a state-of-charge parameter (116) for a motor vehicle battery (16), and the calculated allowable operating limit is a minimum supply voltage (75,76) for said battery (16).

10. A method as claimed in any of Claims 6 to 9, in which there are a plurality of operating parameters (110,116,127), and the calculated allowable operating limit (70,71) is the limit that places the greatest restriction on the operation of the electrically driven pressure charging device (10) so that all operating parameters (110,116,127) remain within allowable limits.

11. A method as claimed in any of Claims 6 to 10, in which the calculation of the allowable operating limit (70,71) involves a reference to both a soft operational limit (75) and a hard operation limit (76), the operation of the electrically driven charging device (10) being limited when the corresponding operating parameter (116) exceeds the soft operational limit (75), the limitation being such that the operating parameter (116) does not at a later time exceed the hard operational limit (76).

12. A method as claimed in Claim 11, in which the operation of the electrically driven charging device (10) is progressively limited as the corresponding operating parameter (116) approaches the hard operational limit (76).

## Patentansprüche

1. Ein Luftladungs-Verstärkungssystem für einen Verbrennungsmotor (1), wobei das System ein elektrisch angetriebenes Druckladegerät (10) umfaßt; eine elektronisch geregelte Drossel (17), um die Motoransaugung zu regeln, und ein elektronisches Regelsystem (32), um den Motorbetrieb zu regeln, worin das elektronische Regelsystem (32) eingerichtet ist um:
a) die Drosselstellung (17) einzustellen, um die Ansaugung des Motors (1) zu regulieren;
b) mindestens einen gewünschten Ansaugparameter (62) entsprechend den Motordrehmoment-Forderung (61) zu berechnen;
c) mindestens einen tatsächlichen Ansaugparameter (122, 125) entsprechend den Motor-Betriebsbedingungen (22, 25) zu bestimmen;
d) den/die gewünschten Ansaugparameter (62) mit dem/den tatsächlichen Ansaugparameter(n) (122, 125) zu vergleichen (63); und
e) die Druckladevorrichtung (10) anzutreiben (114, 214), um die Ansaugung des Motors (1) im Einklang mit dem Vergleich (63) zwischen dem/den gewünschten Ansaugparameter(n) (62) und dem/den tatsächlichen Ansaugparameter(n) (64, 65) nur dann zu verstärken, wenn der Drehmomentforderung (61) durch natürliche Ansaugung alleine nicht nachgekommen werden kann.

2. Ein Verfahren um ein Luftladungs-Verstärkungssystem für einen Verbrennungsmotor (1) zu betreiben, wobei das System ein elektrisch angetriebenes Druckladegerät (10) umfaßt; eine elektronisch geregelte Drossel (17), um die Motoransaugung zu regeln, und ein elektronisches Regelsystem (32), um den Motorbetrieb zu regeln, worin das Verfahren die Schritte umfaßt das elektronische Regelsystem (32) zu verwenden, um:
i) die Drosselstellung (17) einzustellen, um die Ansaugung des Motors (1) zu regulieren;
ii) mindestens einen gewünschten Ansaugparameter (62) entsprechend den Motordrehmoment-Forderung (61) zu berechnen;
iii) mindestens einen tatsächlichen Ansaugparameter (122, 125) entsprechend den Motor-Betriebsbedingungen (22, 25) zu bestimmen;
iv) den/die gewünschten Ansaugparameter (62) mit dem/den tatsächlichen Ansaugparameter(n) (122, 125) zu vergleichen (63) ; und
v) die Druckladevorrichtung (10) anzutreiben (114, 214), um die Ansaugung des Motors (1) im Einklang mit dem Vergleich (63) zwischen dem/den gewünschten Ansaugparameter(n) (62) und dem/den tatsächlichen Ansaugparameter(n) (122, 125) nur dann zu verstärken, wenn der Drehmomentforderung (61) durch natürliche Ansaugung alleine nicht nachgekommen werden kann.

3. Ein Verfahren wie in Anspruch 2 beansprucht, in welchem der/die gewünschte(n) Ansaugparameter (64, 64) im Einklang mit gegenwärtigen Motor-Betriebsbedingungen (20, 21, 23) berechnet ist/sind; einschließlich einer gegenwärtigen Luftladung (122, 125).

4. Ein Verfahren wie in Anspruch 3 beansprucht, in welchem das elektronische Regelsystem (32) eine Regelung im geschlossenen Regelkreis über den Betrieb des elektrisch angetriebenen Druckladegeräts (10) bereitstellt, indem es den/die gegenwärtigen Ansaugparameter (122, 125) überwacht.

5. Ein Verfahren wie in irgendeinem der Ansprüche 2 bis 4 beansprucht, in welchem die Motordrehmoment-Forderung (61) gemäß einer Fahrerforderung (20, 120) berechnet ist.

6. Ein Verfahren wie in irgendeinem der Ansprüche 2 bis 5 beansprucht, in welchem der/die gewünschte(n) Ansaugparameter ein Maß des gewünschten Luftdrucks (64) und/oder des gewünschten Luftmassenstroms (65) ist/sind.

7. Ein Verfahren wie in irgendeinem der Ansprüche 2 bis 6 beansprucht, in welchem das elektronische Regelsystem (32) eingerichtet ist um eine zulässige Betriebsgrenze (70, 71) für den Betrieb des Druckladegeräts (10) auf Grundlage mindestens eines Betriebsparameters (110, 116, 127) des Luftladungs-Verstärkungssystems zu berechnen (68, 69), und um das Druckladegerät (10) auf den/die gewünschten Ansaugparameter (64, 65) reagierend und innerhalb der berechneten zulässigen Betriebsgrenze (70, 71) zu betreiben.

8. Ein Verfahren wie in Anspruch 6 oder Anspruch 7 beansprucht, in welchem der Betriebsparameter ein thermischer Parameter (110) des Druckladegeräts (10) ist, und die berechnete zulässige Betriebsgrenze ein maximaler thermischer Grenzwert (70) ist.

9. Ein Verfahren wie in irgendeinem der Ansprüche 6 bis 8 beansprucht, in welchem der Betriebsparameter ein Ladezustands-Parameter (116) für eine Motorfahrzeug-Batterie (16) ist, und die berechnete zulässige Betriebsgrenze eine minimale Versorgungsspannung (75, 76) für diese Batterie (16) ist.

10. Ein Verfahren wie in irgendeinem der Ansprüche 6 bis 9 beansprucht, in welchem es eine Mehrzahl von Betriebsparametern (110, 116, 127) gibt, und die berechnete zulässige Betriebsgrenze (70, 71) jener Grenzwert ist, welcher dem Betrieb des elektrisch angetriebenen Druckladegeräts (10) die größte Beschränkung auferlegt, so daß alle Betriebsparameter (110, 116, 127) innerhalb zulässiger Grenzwerte verbleiben.

11. Ein Verfahren wie in irgendeinem der Ansprüche 6 bis 10 beansprucht, in welchem die Berechnung der zulässigen Betriebsgrenze (70, 71) einen Bezug sowohl auf eine weiche oder "Software-"(Programm-) Betriebsgrenze (75) wie auch auf eine harte oder "Hardware-"(Material-) Betriebsgrenze (76) beinhaltet; und der Betrieb des elektrisch angetriebenen Ladegeräts (10) begrenzt wird, wenn der entsprechende Betriebsparameter (116) die weiche oder "Software-"(Programm-) Betriebsgrenze (75) übersteigt, wobei die Begrenzung derart ist, daß der Betriebsparameter zu einer späteren Zeit die harte oder "Hardware-" (Material-) Betriebsgrenze (76) nicht übersteigt.

12. Ein Verfahren wie in Anspruch 11 beansprucht, in welchem der Betrieb des elektrisch betriebenen Ladegeräts (10) zunehmend begrenzt wird, während der entsprechende Betriebsparameter (116) sich der harten oder "Hardware-" (Material-) Betriebsgrenze (76) nähert.

## Revendications

1. Système de suralimentation pour un moteur à combustion interne (1), le système comprenant un dispositif de suralimentation en pression à commande électrique (10), un papillon (17) à commande électronique pour commander l'aspiration du moteur et un système de commande électronique (32) pour commander le fonctionnement du moteur, dans lequel le système de commande électronique (32) est disposé ou aménagé de façon à :
a) régler la position du papillon (17) pour réguler l'aspiration du moteur (1) ;
b) calculer au moins un paramètre d'aspiration souhaité (62) en fonction de la demande en couple moteur (61) ;
c) déterminer au moins un paramètre d'aspiration réel (122, 125) en fonction des conditions de fonctionnement du moteur (22, 25) ;
d) comparer (63) le(s) paramètre(s) d'aspiration souhaité(s) (62) au(x) paramètre(s) d'aspiration réel(s) (122, 125) ; et
e) entraîner (114, 214) le dispositif de suralimentation (10) pour accroître l'aspiration du moteur (1) en accord avec la comparaison (63) entre le(s) paramètre(s) d'aspiration souhaité(s) (62) et le(s) paramètre(s) d'aspiration réel(s) (64, 65) uniquement lorsque la demande en couple (61) ne peut être satisfaite par la seule aspiration naturelle.

2. Procédé d'utilisation d'un système de suralimentation pour un moteur à combustion interne (1), le système comprenant un dispositif de suralimentation à commande électrique (10), un papillon (17) à commande électronique pour commander l'aspiration du moteur et un système de commande électronique (32) pour commander le fonctionnement du moteur, dans lequel le procédé comprend les étapes consistant à utiliser le système de commande électronique (32) pour :
i) régler la position du papillon (17) pour réguler l'aspiration du moteur (1) ;
ii) calculer au moins un paramètre d'aspiration souhaité (62) en fonction de la demande en couple moteur (61) ;
iii) déterminer au moins un paramètre d'aspiration réel (122, 125) en fonction des conditions de fonctionnement du moteur (22, 25) ;
iv) comparer (63) le(s) paramètre(s) d'aspiration souhaité(s) (62) au(x) paramètre(s) d'aspiration réel(s) (122, 125) ; et
v) entraîner (114, 214) le dispositif de suralimentation (10) pour accroître l'aspiration du moteur (1) en accord avec la comparaison (63) entre le(s) paramètre(s) d'aspiration souhaité(s) (62) et le(s) paramètre(s) d'aspiration réel(s) (122, 125) uniquement lorsque la demande en couple (61) ne peut être satisfaire par la seule aspiration naturelle.

3. Procédé selon la revendication 2, dans lequel le(s) paramètre(s) d'aspiration souhaité(s) (64, 65) est/sont calculé(s) en accord avec les conditions actuelles de fonctionnement du moteur (20, 21, 23), en incluant la pression d'air d'admission actuelle (122, 125).

4. Procédé selon la revendication 3, dans lequel le système de commande électronique (32) procure un asservissement du fonctionnement du dispositif de suralimentation à commande électrique (10) en surveillant le(s) paramètre(s) d'aspiration actuel(s) (122, 125).

5. Procédé selon l'une quelconque des revendications 2 à 4, dans lequel la demande en couple moteur (61) est calculée en fonction de la demande du conducteur (20, 120).

6. Procédé selon l'une des revendications 2 à 5, dans lequel le(s) paramètre(s) d'aspiration souhaité(s) est/sont une mesure de la pression d'air souhaitée (64) et/ou du débit d'air massique souhaité (65).

7. Procédé selon l'une des revendications 2 à 6, dans lequel le système de commande électronique (32) est disposé ou aménagé de façon à calculer (68, 69) une limite de fonctionnement admissible (70, 71) pour le fonctionnement du dispositif de suralimentation (10) en fonction d'au moins un paramètre de fonctionnement (110, 116, 127) du système de suralimentation, et pour piloter le dispositif de suralimentation (10) afin qu'il réponde au(x) paramètre(s) d'aspiration souhaité(s) (64, 65) sans dépasser la limite de fonctionnement admissible calculée (70, 71).

8. Procédé selon les revendications 6 ou 7, dans lequel le paramètre de fonctionnement est un paramètre thermique (110) du dispositif de suralimentation (10) et la limite de fonctionnement admissible calculée est une limite thermique maximale (70).

9. Procédé selon l'une des revendications 6 à 8, dans lequel le paramètre de fonctionnement est un paramètre (116) d'état de charge d'une batterie (16) de véhicule à moteur, et la limite de fonctionnement admissible calculée est une tension d'alimentation minimale (75, 76) de ladite batterie (16).

10. Procédé selon l'une des revendications 6 à 9, dans lequel il y a une pluralité de paramètres de fonctionnement (110, 116, 127), et la limite de fonctionnement admissible calculée (70, 71) est la limite qui restreint le plus le fonctionnement du dispositif de suralimentation à commande électrique (10) de telle sorte que tous les paramètres de fonctionnement (110, 116, 127) restent dans des limites admissibles.

11. Procédé selon l'une des revendications 6 à 10, dans lequel le calcul de la limite de fonctionnement admissible (70, 71) implique une référence à une limite de fonctionnement logicielle (75) et à une limite de fonctionnement matérielle (76), le fonctionnement du dispositif de suralimentation à commande électrique (10) étant limité lorsque le paramètre de fonctionnement (116) correspondant dépasse la limite de fonctionnement logicielle (75), la limitation étant telle que le paramètre de fonctionnement (116) ne dépassera pas par la suite la limite de fonctionnement matérielle (76).

12. Procédé selon la revendication 11, dans lequel le fonctionnement du dispositif de suralimentation à commande électrique (10) est progressivement limité lorsque le paramètre (116) de fonctionnement correspondant approche de la limite de fonctionnement matérielle (76).
